# EUROPÄISCHE PATENTSCHRIFT

(11) **EP 1 060 066 B1**
(45) Veröffentlichungstag und Bekanntmachung des Hinweises auf die Patenterteilung: **23.04.2003**
(21) Anmeldenummer: 99937899.5
(22) Anmeldetag: 20.02.1999
(51) Int. Cl.: B29C 45/76, G05B 19/408

(54) **VERFAHREN ZUR KONVERTIERUNG VON EINSTELLDATEN FÜR KUNSTSTOFF-SPRITZGIESSMASCHINEN**
METHOD FOR CONVERTING REGULATING DATA FOR PLASTIC INJECTION-MOULDING MACHINES
PROCEDE DE CONVERSION DE DONNEES DE REGLAGE DE PRESSES D'INJECTION DE MATIERE PLASTIQUE

(30) Priorität: 02.03.1998 DE 19808679
(43) Veröffentlichungstag der Anmeldung: 20.12.2000
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP9901105
(87) Internationale Veröffentlichungsnummer: WO99044804

(56) Entgegenhaltungen:
- EP-A- 0 419 665
- EP-A- 0 449 494
- PATENT ABSTRACTS OF JAPAN vol. 012, no. 332 (M-738), 8. September 1988 & JP 63 094810 A (MITSUBISHI HEAVY IND LTD), 25. April 1988
- ZIEMBA R: "USE OF A PROGRAMMABLE LOGIC CONTROLLER (PLC) FOR TEMPERATURE, POSITION, VELOCITY AND PRESSURE CONTROL OF INJECTION MOLDING MACHINERY" CONFERENCE RECORD OF THE INDUSTRY APPLICATIONS SOCIETY ANNUAL MEETING (IAS), PITTSBURGH, OCT. 2 - 7, 1988, Bd. 2, Nr. CONF. 23, 2. Oktober 1988, Seiten 1397-1404, XP000042853 INSTITUTE OF ELECTRICAL AND ELECTRONICS ENGINEERS
- R.C.M. VAN HEST: "data communication for injection moulding machines" INDUSTRIAL AND PRODUCTION ENGINEERING., Bd. 11, Nr. 3, Oktober 1987, Seiten 134-139, XP002104918 MUNCHEN DE

## Beschreibung

Die Erfindung betrifft ein Verfahren zur Konvertierung von Einstelldaten für Kunststoff-Spritzgießmaschinen gemäß Anspruch 1.

Zur Erstellung von Einstelldaten wird bisher eine Spritzgießform einer Kunststoff-Spritzgießmaschine zugeführt und der Bediener gibt dann in Abhängigkeit des zu fertigenden Teiles, entweder unterstützt durch eine interaktive Eingabesteuerung oder mit seinem Erfahrungswissen Einstelldaten und Parameter ein, die eine Serienproduktion von Spritzteilen ermöglichen. Ist ein derartiger Einstelldatensatz einmal erstellt, kann mit diesem Datensatz und der zugehörigen Spritzgießform ein Spritzteil auf der gleichen Maschine immer wieder weitestgehend ohne Neueinstellung zuverlässig gefertigt werden. Allerdings besteht die Möglichkeit, daß die Spritzteile mit derselben Spritzgießform auch auf einer anderen Maschine gefertigt werden müssen. Nicht immer sind dabei die Steuerungen der beiden Spritzgießmaschinen miteinander kompatibel, sei es, daß es sich bei der weiteren Spritzgießmaschine um eine Weiterentwicklung mit einer neueren Steuerung handelt, sei es daß Spritzgießmaschinen verschiedener Wettbewerber vorhanden sind, so daß mit Sicherheit keine Kompatibilität zwischen den verschiedenen Steuerungen gewährleistet ist. Im Rahmen der Aufwärtskompatibilität zwischen verschiedenen Steuerungen eines Herstellers ist es insofern bisher bekannt, dass der Einstelldatensatz auf der Maschine mit der neuen Steuerung gelesen und bei jedem nicht kompatiblen Wert, also bei jedem Wert, der nicht 1:1 übernehmbar ist, der Bediener gefragt wird, welche Eingaben er stattdessen wünscht. Dies führt einerseits zu einem erheblichen Aufwand beim Einrichten der Maschine, bedeutet aber auch eine große Fehlerquelle, da ein derartiges Einrichten, insbesondere auf einer neuen, eventuell umfangreicher ausgestatteten Steuerung nur mit entsprechenden Kenntnissen und Erfahrungen des Einrichters zu überschauen ist. Ein selbsttätiges Konvertieren findet nicht statt.

Nach der JP 63 094810 A werden mechanische Parameter zwischen einer ersten Spritzgießmaschine und einer zweiten Spritzgießmaschine konvertiert, wenn eine Form von der ersten Maschine zur zweiten Maschine verbracht wird. Unmittelbar identische Daten werden 1:1 übernommen, während nicht miteinander kompatible Daten berechnet und zur Überprüfung dem Benutzer auf einem Display gezeigt werden. Damit ist bekannt, physikalisch relevante Größen des Spritzprozesses an einer Form in maschinenrelevante Sollgrößen mittels Umrechnungsformel umzuwandeln und dies kompatibel auf verschiedene Maschinengrößen. Die Überführung der Daten wird jedoch abgebrochen, sobald eine unmittelbare Überführung nicht möglich ist. Eine vollständige Umsetzung von Steuerung zu Steuerung erfolgt damit nicht.

Aus der EP 185 093 A1 ist es bekannt, zur Konvertierung von seriellen in parallele Datensätze einen ersten Einstelldatensatz einer ersten Einrichtung mittels eines Konvertierers in einen weiteren Einstelldatensatz zur Serienproduktion mit der weiteren Maschine zu konvertieren. Damit nicht unmittelbare kompatible Einstelldaten des ersten Einstelldatensatzes werden selbständig in Einstelldaten des weiteren Einsteildatensatzes gewandelt. Eine Anpassung an die Kunststoff-Spritzgießtechnik findet nicht statt, vielmehr wird lediglich eine zügigere Bereitstellung der Daten bei der Überführung von seriellen auf parallele Datensätze gewährleistet.

Aus der EP 449 494 A2 ist eine Vorrichtung zum unmittelbaren Konvertieren von Daten einer Datenbasis in die andere Datenbasis bekannt, ohne dass auf Spezialitäten verschiedener Steuerungen eingegangen werden kann. Die Vorrichtung ist nicht für den Einsatz an einer Spritzgießmaschine bestimmt, so dass ein entsprechendes Grundlagenwissen über die Vorgänge an einer Spritzgießmaschine nicht implementiert ist.

Aus der EP 475 063 A2 ist für das Zweikomponentenspritzen mit zwei Spritzgießeinheiten in eine Spritzgießform eine Steuerung zur Steuerung mehrerer Spritzgießeinheiten und einer gemeinsamen Prozeßsteuerung bekannt. Geschaffen wird hierbei insbesondere ein Übergabepunkt zwischen den beiden Spritzgießeinheiten. Eine Konvertierung von Einstelldatensätzen erfolgt dabei nicht.

Darüber hinaus sind interaktive Verfahren zur Erstellung von Einstelldatensätzen z.B. aus der US-A 5,350,546, US-A 5,275,768 bekannt, bei denen Einstelihilfen vorgesehen werden. Dabei wird entweder mit virtuellen Modellen gearbeitet oder es werden auf einem Expertenwissen beruhende Vorschläge zur Beseitigung von Spritzgießfehlern gemacht. Ebenso ist es aus US-A 5,216,617 bekannt, bei mehreren miteinander vernetzten Spritzgießmaschinen, Fehler, die an einer Spritzgießmaschine festgestellt werden, Uber einen zentralen Leitrechner so auszuwerten, daß die dabei ermittelten Daten zur Vermeidung von Fehlern bei den anderen Spritzgießmaschinen herangezogen werden können. Sämtliche dieser Verfahren sind jedoch darauf abgestimmt, daß an den Spritzgießmaschinen mit ein und derselben Steuerung gearbeitet wird, so daß ein Konvertieren von Einstelldaten zwischen verschiedenen Spritzgießmaschinen nicht erforderlich ist.

Ausgehend von diesem Stand der Technik liegt der vorliegenden Erfindung die Aufgabe zugrunde, ein Verfahren zu schaffen, das einmal in Zusammenhang mit einer bestimmten Spritzgießform an einer Spritzgießmaschine eingegebene Einstelldaten auch zur Verwendung an anderen Spritzgießmaschinen zugänglich macht, selbst wenn die Steuerungen der Spritzgießmaschinen nicht miteinander kompatibel sind.

Diese Aufgabe wird durch ein Verfahren mit den Merkmalen des Anspruches 1 gelöst.

Zur Ausführung des Verfahrens ist es erforderlich, daß eine Expertendatenbank einem Speicher zugeführt wird, so daß ein Konvertierer in Verbindung mit einem ersten Einstelldatensatz in der Lage ist, hieraus die Einstelldaten für einen weiteren Einstelldatensatz an einer weiteren Steuerung zu generieren. Diese Expertendatenbank beinhaltet aber auch eine Wissensbasis zur Funktionsweise des ersten Einstelldatensatzes auf der ersten Spritzgießmaschine als auch Über dessen internen Aufbau auf dem Datenträgermedium. Außer dem Einstelldatensatz der ersten Spritzgießmaschine muß zumindest bekannt sein, welche Einstelldaten die weitere Spritzgießmaschine verlangt. Mit diesen Kenntnissen ist der Konvertierer in der Lage zu entscheiden, welche Einstelldaten unmittelbar übernommen werden können, welche geringfügig überarbeitet werden und welche vollständig neu erstellt werden müssen. Auf die meist interaktive Mitwirkung eines Einrichters kann dann weitgehend verzichtet werden. Damit ergibt sich eine kurzfristige Einrichtphase und damit eine Verkürzung der Rüstzeit des Werkzeugs an einer neuen Spritzgießmaschine, sofern einmal an einer anderen Spritzgießmaschine ein Einstelldatensatz erstellt worden ist. Gleichzeitig werden aufgrund des implementierten Grundwissens über die Regeln des Spritzgießens Fehlerquellen weitestgehend ausgeschlossen, die ansonsten evtl. auch aus Unkenntnis vom Einrichter falsch gesetzt werden, so daß auch in dieser Hinsicht die Einrichtphase nochmals verkürzt wird und gleichzeitig weniger Ausschuß anfällt. Von Vorteil ist, daß der Einrichter nicht erst zeitaufwendig die Bedienoberfläche der weiteren Steuerung erlernen und begreifen muß, sondern unmittelbar unter Rückgriff auf seine bestehenden Datensätze diese einspielen und verwenden kann.

Dies ist insbesondere von Vorteil, wenn die Steuerung der weiteren Spritzgießmaschine von einem hochwertigeren Charakter ist. Der Einrichter bekommt dann einen komfortablen und schnellen Weg, von einer einfachen älteren Maschine auf eine neue Technologie umzusteigen.

Bei einer Ausgestaltung nach Anspruch 2 findet sich in dem Konvertierer die anwendungstechnische Erfahrung des Einrichters der ersten Spritzgießmaschine wieder, so daß ohne Zeitaufwand ein Übergang auf eine neue hochwertigere Maschine möglich ist. Der Konvertierer achtet insbesondere darauf, daß wichtige Einstelldaten, die bei falscher Interpretation durch den Einrichter Werkzeugzeugschäden hervorrufen können, vermieden werden und verändert dazu eigenmächtig diese Einstelldaten wie ein geübter Maschineneinrichter aufgrund der vorhandenen Expertendatenbank.

In einer Ausgestaltung nach den Ansprüchen 5-7 besteht die Möglichkeit, daß der Konvertierer sich aus dem ersten Einstelldatensatz in Verbindung mit Parameterkurven, die er sich entweder selbst berechnet oder aus der Serienproduktion auf der ersten Spritzgießmaschine speichert, die Einstelldaten weitestgehend selbsttätig generiert und sich dabei die im Rahmen der Qualitätsüberwachung eingesetzten Rechenmechanismen zunutze macht.

Im folgenden wird die Erfindung anhand eines Ausführungsbeispiels näher erläutert. Es zeigen:
- Fig. 1: eine schematische Darstellung im Hinblick auf die Erstellung eines Einstelldatensatzes,
- Fig. 2: die schematische Darstellung eines off-line-Konvertierers
- Fig. 3: einen Programmablauf, der die Vorgehensweise des Konvertierers verdeutlicht,
- Fig. 4, 5: Prozeßkurvenverläufe und daraus berechnete Prozeßphasen.

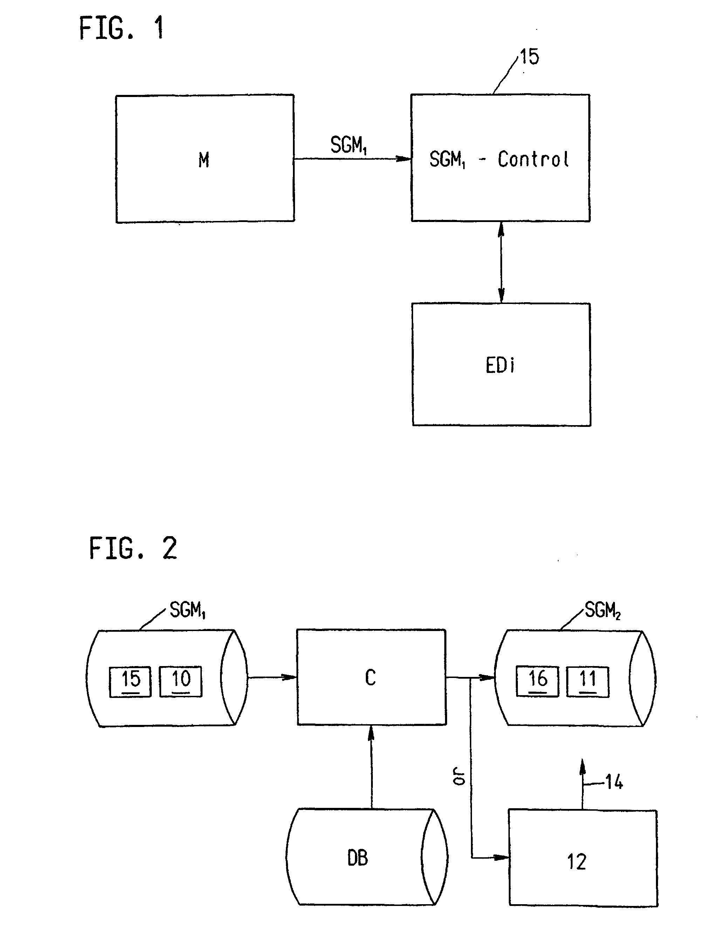

Das Verfahren dient zur Erstellung von Einstelldaten für Kunststoff-Spritzgießmaschinen bzw. für Spritzgießmaschinen zur Verarbeitung plastifizierbarer Massen, wozu auch pulvrige oder keramische Massen gehören können. Ziel des Verfahrens ist es, möglichst einen Einstelldatensatz für eine Spritzgießform M nur einmal erstellen zu müssen und diesen Einstelldatensatz dann auch auf anderen Spritzgießmaschinen wieder verwenden zu können, selbst wenn dort eine andere Steuerung implementiert ist. Die grundsätzlichen Voraussetzungen hierfür verdeutlichen die Fign. 1 und 2.

Zunächst wird ein Spritzgießwerkzeug M auf einer Spritzgießmaschine SGM₁ eingerichtet und gefahren, bis dort in der Serienproduktion Spritzteile erstellt werden. Die erste Spritzgießmaschine SGM₁ besitzt hierzu eine erste rechnerunterstützte Steuerung SGM₁-Control mit einem ersten Programmspeicher 15, in dem die bis zur Lauffähigkeit der Spritzgießform M auf dieser Spritzgießmaschine erforderlichen Bedienereingaben und Eingabeparameter als erster Einstelldatensatz ED₁ gespeichert sind. Alternativ können die Einstelldaten auch nur auf einem Einstelldatenblatt erstellt sein, in der Regel liegen bei modernen Spritzgießmaschinen jedoch elektronisch abgespeicherte Einstelldatensätze vor, die sich auf irgendeinem Speichermedium oder Datenträger befinden, wie z.B. einer Diskette, Mikrokassette oder bei vernetzten Spritzgießmaschinen evtl. auch auf der Festplatte eines Leitrechners.

Außer dieser ersten Spritzgießmaschine SGM₁ existiert wenigstens eine weitere Spritzgießmaschine SGM₂, die ebenfalls eine weitere rechnerunterstützte Steuerung SGM₂-Control aufweist. Sind die Steuerungen miteinander kompatibel, kann eine auf der ersten Spritzgießmaschine SGM₁ betriebene Spritzgießform ohne weiteres auch auf der weiteren Spritzgießmaschine eingesetzt werden, da der Einstelldatensatz ED₁ ohne weiteres zu übernehmen ist. Dies ist allerdings dann nicht mehr der Fall, wenn die weitere Steuerung SGM₂-Control mit der ersten Steuerung SGM₁-Control zumindest nicht mehr vollständig kompatibel ist. Die weitere Spritzgießmaschine besitzt ferner einen weiteren Programmspeicher 16 zur Speicherung von Bedienungseingaben und Eingabeparametern als weiteren Einstelldatensatz.

Die Einstelldatensätze können von Spritzgießmaschine zu Spritzgießmaschine bei entsprechender Vernetzung entweder on-line oder off-line übertragen werden, wie dies Fig. 2 verdeutlicht. Die erste Spritzgießmaschine SGM₁ besitzt hierzu entweder bereits eine entsprechende Möglichkeit zur Erstellung eines Datenträgers oder es wird dieser Spritzgießmaschine ein Datenlesegerät 10 zugeordnet, das den Datenträger aus der ersten Spritzgießmaschine SGM₁ lesen kann und in ein Datenfile umsetzt. Mit den aus einer Datenbank DB gewonnenen Informationen im Hinblick auf die Formatierung und/oder über eine Expertendatenbank Exp wird der Konvertierer C einerseits in die Lage versetzt, nun ein Datenfile zu erstellen, das zumindest auf der weiteren Spritzgießmaschine SGM₂ mit dem dortigen Diskettenlaufwerk 11 oder einem sonstigen Datenlesegerät lesbar ist. Dieser Konvertierer C kann jedoch auch bereits off-line den weiteren Einstelldatensatz ED_{1, neu} erstellen. Alternativ besteht auch die Möglichkeit, daß der Konvertierer C die gewonnenen Daten an einen Leitrechner 12 gibt, der diese dann an eine Datenleitung, die schematisch durch den Pfeil 14 dargestellt ist, an die weitere Spritzgießmaschine SGM₂ weiterreicht.

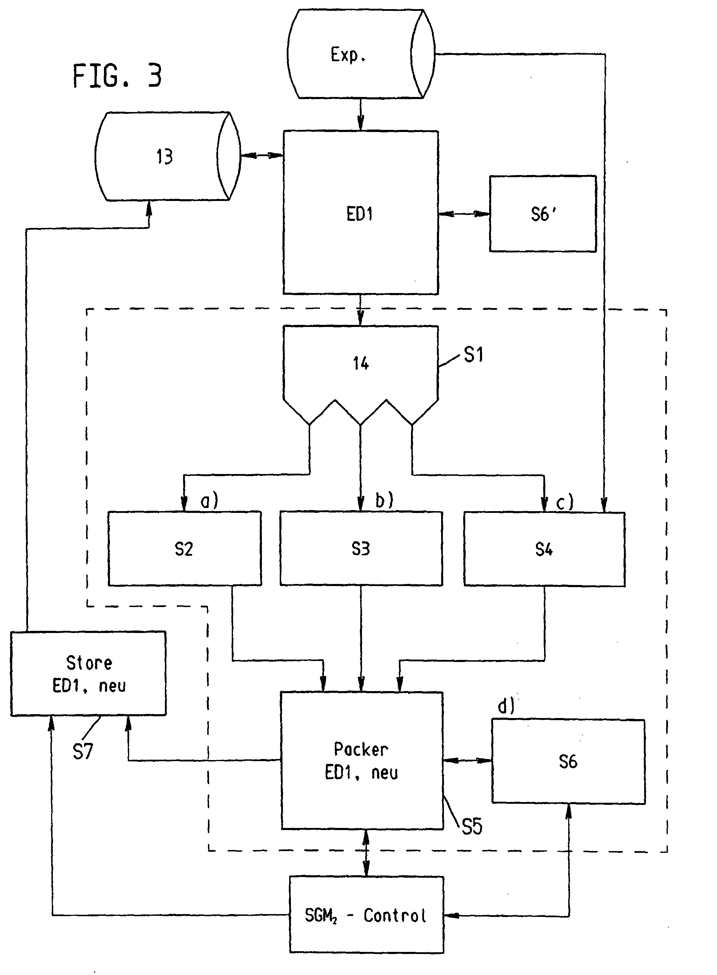

Fig. 3 zeigt den grundsätzlichen Programmablauf bei der Konvertierung eines ersten Einstelldatensatzes ED₁. Über ein Datenlesegerät 13 gelangt der erste Einstelldatensatz ED₁ in den Konvertierer C, der in Fig. 3 durch einen gestrichelten Rahmen dargestellt ist. Bedarfsweise kann der erste Einstelldatensatz ED₁ zuvor an einem Datensichtgerät über einen Editor in Schritt S6' noch editiert werden. Dabei finden in den Konvertierer ebenfalls Eingang die Informationen aus einer Expertendatenbank Exp. Diese Expertendatenbank beinhaltet zumindest ein Grundwissen über die Regeln des Spritzgießens, aber auch eine Wissensbasis zur Funktionsweise des ersten Einstelldatensatzes ED₁ auf der ersten Spritzgießmaschine SGM₁ als auch über dessen internen Aufbau auf dem Datenträgermedium. Zudem sollte die Expertendatenbank Exp wissen, welche Einstelldaten die weitere Spritzgießmaschine SGM₂ wünscht. Mit dieser Expertendatenbank wandelt der Konvertierer C die Einstelldaten des ersten Einstelldatensatzes ED₁ in einen Einstelldatensatz ED_{1, neu} um, der zur Serienproduktion von Spritzgießteilen auf der weiteren Spritzgießmaschine und auf beliebigen weiteren Spritzgießmaschinen SGM₂ lauffähig ist, auf denen die weitere Steuerung SGM₂-Control implementiert ist. Mit der Expertendatenbank Exp ist der Konvertierer C in der Lage, nicht unmittelbar kompatible Einstelldaten des ersten Einstelldatensatzes ED₁ selbsttätig in Einstelldaten des weiteren Einstelldatensatzes ED_{1, neu} umzuwandeln, die von der weiteren Steuerung SGM₂-Control zur Erzielung einer Lauffähigkeit der Spritzgießform M auf der weiteren Spritzgießmaschine SGM₂ gefordert werden.

Im Konvertierer C ist hierzu zunächst ein Verteiler 14 vorgesehen, der in Schritt S1 die Daten des ersten Einstelldatensatzes ED₁ nach folgenden Kriterien aufteilt.
a) 1:1 verwertbare Daten (Schritt S2)
   Bei diesen Daten handelt es sich um Daten, die nahezu unverändert übernommen werden können und evtl. lediglich rechnerspezifisch umformatiert werden müssen, wie z.B. Maßeinheiten. Hierher gehören aber auch bereits kleinere Umsetzrechnungen, beispielsweise, daß Maßeinheiten umgesetzt werden mit anderen Werten aus dem Datensatz, wenn z.B. ein Festkomma in ein Fließkomma geändert werden muß. Ein weiteres Beispiel wäre, wenn ein Spritzdruck in hydraulischen Einheiten in einen spezifischen Spritzdruck umgerechnet werden muß, wenn z.B. der Schneckendurchmesser bekannt ist, so daß sich ein Spritzdruck je Flächeneinheit des Schneckendurchmessers ergibt.
b) Vorbesetzen und Ergänzen (Schritt S3)
   Hierher gehören Daten, bei denen der Konvertierer C mit der Expertendatenbank Exp entscheidet, ob im ersten Einstelldatensatz ED₁ nicht enthaltene Einstelldaten, die in der weiteren Steuerung SGM₂-Control für den weiteren Einstelldatensatz ED_{1, neu} erforderlich sind, inaktiv oder zu ergänzen sind. Zum Beispiel kann sich aus dem ersten Einstelldatensatz ergeben, daß Kernzüge bei dieser Spritzgießform M nicht benötigt sind. In diesem Fall müssen diese dann auch im weiteren Einstelldatensatz ED₁, ₙₑᵤ inaktiv gesetzt werden, insbesondere, wenn dort mehr Kernzüge vorgesehen sind als im ersten Einstelldatensatz ED₁.
   Ein weiteres Beispiel wäre, daß die weitere Steuerung SGM₂-Control eine graphisch programmierbare Ablaufsequenz mit sehr hoher Flexibilität aufweist, was auf der Steuerung der ersten Spritzgießmaschine nicht der Fall ist. Um diese Ablaufsequenz aus dem ersten Einstelldatensatz ED₁ zu erzeugen, werden mehrere ja/nein Funktionalitäten aus dem ersten Einstelldatensatz ED₁ oder aus der Expertendatenbank z.B. über bekannte feste Ablaufeinstellungen der ersten Spritzgießmaschine SGM₁ ausgewertet und zu einer lauffähigen Ablaufsequenz-Datensatzeinstellung ergänzt.
c) Einstelldaten interpretieren (Schritt S4)
   Hier wird der Konvertierer C mit dem Grundwissen Exp über die Regeln des Spritzgießens in die Lage versetzt, im ersten Einstelldatensatz ED₁ nicht enthaltene Einstelldaten, die in der weiteren Steuerung für den weiteren Einstelldatensatz ED_{1, neu} zwingend erforderlich sind, mit diesem Grundwissen aus dem ersten Einstelldatensatz ED₁ zu errechnen. Dies ist z.B. der Fall,wenn die weitere Steuerung SGM₂-Control mehr Fahrstufen für die Vorwärtsbewegung der Schnecke oder mehr Druckstufen für den Nachdruckverlauf besitzt. Hier wird dann selbsttätig ein entsprechend angepaßtes Profil für die weitere Steuerung ermittelt, das sich bedarfsweise an zwischen den ursprünglichen Stützwerten interpolierten Stützwerten orientiert.
   Ein weiteres Beispiel ist ein im ersten Einstelldatensatz unabhängig von der Bewegung der Spritzgießform M vorgesehener Werkzeugzwischenstop. Hier wird dann in der für diesen Zwischenstop ursprünglich nicht eingerichteten weiteren Steuerung SGM₂-Control eine zusätzliche Fahrstufe vorgesehen, die am Zwischenstop-Weg des ersten Einstelldatensatzes ED₁ eingerichtet wird und z.B. die Fahrgeschwindigkeit und Fahrkraft des am nächsten liegenden Umschaltpunktes zwischen den Fahrstufen des ersten Einstelldatensatzes ED₁ erhält.
   Oder es wird eine Referenzkurve zur Qualitätsüberwachung gefordert, die jedoch in der ersten Steuerung SGM₁-Control weniger Stützwerte hat als in der weiteren Steuerung SGM₂-Control. In diesem Fall wird die Referenzkurve aus der ersten Steuerung zur hochauflösenden Referenzkurve der weiteren Steuerung interpoliert. Dasselbe gilt auch umgekehrt, wenn der erste Einstelldatensatz ED₁ höher auflösend ist. Dann werden für den weiteren Einstelldatenatz ED_{1, neu} weniger Stützwerte berechnet, indem die entsprechende Referenzkurve des ersten Einstelldatensatzes ED₁ auf spritztechnisch markante Stellen, wie z.B. Extremwerte, Stellen großer Steigung oder Wendepunkte untersucht werden und diese als Stützwerte herangezogen werden.

In Schritt S5 versucht jetzt der Konvertierer soweit als möglich, den weiteren Einstelldatensatz ED_{1, neu} in einem Packer wieder zu einem vollständigen Einstelldatensatz zusammenzupacken. Falls hier noch Lücken bestehen, werden nun noch Einstelldaten interaktiv in Verbindung mit dem Einrichter erstellt. Auch bei der weiteren Steuerung SGM₂-Control kann es sich hier z.B. um nicht vorhandene Funktionalitäten handeln, die im ersten Einstelldatensatz ED₁ vorhanden waren oder nicht mit der Expertendatenbank Exp interpretierbare Sonderdaten handeln. Der Bediener oder Einrichter erhält hierzu eine Fehlermeldung, auf die er entsprechend interaktiv reagieren muß (Schritt S6) auf einem Datensichtgerät, von dem aus er auch die Steuerung 16 der weiteren Spritzgießmaschine SGM₂ unmittelbar beeinflussen kann oder auf dem die Steuerung 16 Meldungen ausgibt.

Ist der Einstelldatensatz erstellt, wird er an die Steuerung SGM₂-Control der weiteren Spritzgießmaschine SGM₂ mit Programmspeicher 16 übergeben. Der so erstellte neue Einstelldatensatz wird im Schritt S7 als ED_{1, neu} gespeichert.

Ergänzend ist der Konvertierer C in der Lage, aus dem ersten Einstelldatensatz ED₁ Parameterkurven zu berechnen oder derartige Parameterkurven zusätzlich zum ersten Einstelldatensatz ED₁ aus der Serienproduktion auf der ersten Spritzgießmaschine SGM₁ abzuspeichern. Aus diesen Parameterkurven und bedarfsweise ihrem mathematischen Integral und Differentialen lassen sich dann Hilfen zur Erstellung des weiteren Einstelldatensatzes ED_{1, neu} ermitteln. Hierbei besteht auch die Möglichkeit, wie z.B. aus der WO-A 96/09926 bekannt, die Parameterkurven selbsttätig in Prozeßphasen zu gliedern, wobei jede Parameterkurve abschnittsweise betrachtet wird und sich die Abschnitte selbsttätig einstellen lassen.

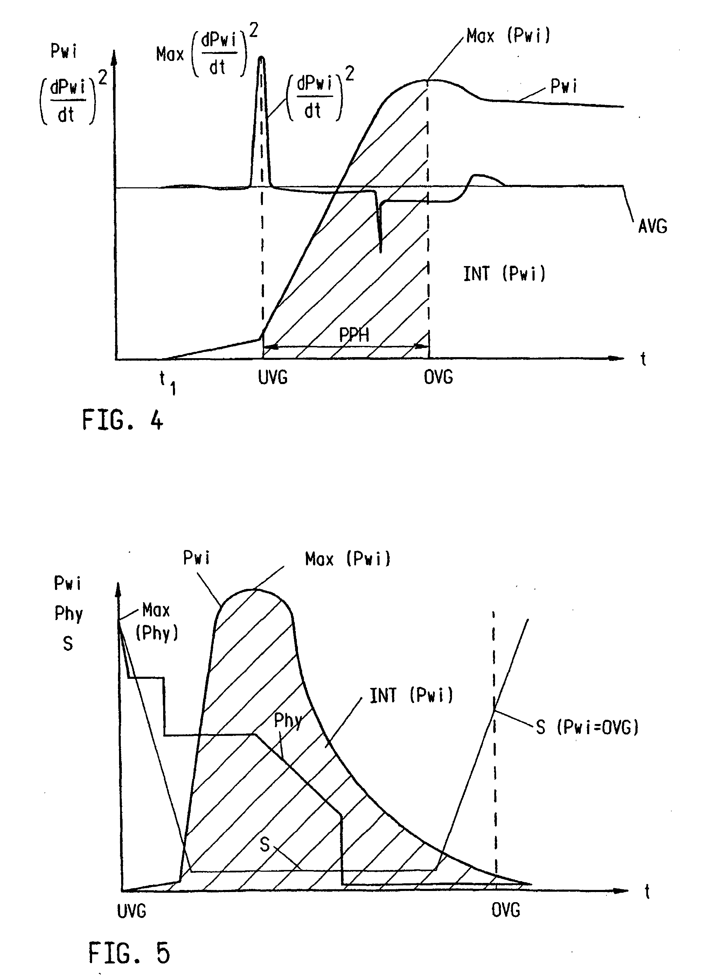

Hierzu zeigen die Fign. 4 und 5 ein Beispiel. In Fig. 4 ist zunächst die Werkzeuginnendruckkurve Pwi dargestellt. Zu einem Zeitpunkt t₁ beginnt der Spritzzyklus, und sobald eine entsprechende Füllung des Formhohlraums vorliegt, steigt der Druck an der unteren Verarbeitungsgrenze UVG an, bis er bei Formfüllung an der oberen Verarbeitungsgrenze OVG den maximalen Werkzeuginnendruck Max(Pwi) erreicht. In Fig. 4 ist ferner aufgetragen die zweite Ableitung des Werkzeuginnendrucks nach der Zeit (dPwi/dt)² dargestellt. Um nun einen Abschnitt in Form einer Prozeßphase PPH zu ermitteln, in dem z.B. das Integral über die Werkzeuginnendruckkurve Int(Pwi) erstellt werden soll, kann der Extremwert Max(dPwi/dt)² der zweiten Ableitung des Werkzeuginnendrucks zur Bestimmung der unteren Verarbeitungsgrenze UVG und der Extremwert des Werkzeuginnendrucks zur Bestimmung der oberen Verarbeitungsgrenze OVG verwendet werden. Als weitere Kennzahlen, die für den jeweiligen Prozeß, kennzeichnend sind, kann der Mittelwert AVG(dPwi/dt)² des Werkzeuginnendrucks herangezogen werden.

Die Prozeßablaufdiagramme in Fig. 5 zeigen über die Zeit aufgetragen den Werkzeuginnendruck Pwi, den Hydraulikdruck Phy und den Schneckenweg s jeweils während eines Spritzzyklus. Untere Verarbeitungsgrenze UVG und obere Verarbeitungsgrenze OVG sind hierbei Anfang und Ende des Spritzzyklus. Auch hier lassen sich durch eine Korrelation der verschiedenen Druckkurven und der Extremwerte Max(Phy) des Hydraulikdrucks und Max(Pwi) des Werkzeuginnendrucks verschiedene Punkte berechnen, die für gewisse Abschnitte kennzeichnend sind, so daß innerhalb dieser Abschnitte dann eine bedarfsweise Ergänzung des jeweils zu erstellenden Einstelldatensatzes möglich ist, wenn z.B. weitere Stützwerte aus einer Kurve zu berechnen sind oder bestimmte Drücke an neuen Schneckenpositionen erfaßt werden müssen, weil z.B. mit einer anderen Spritzgießeinheit gearbeitet wird. Hierfür kann z.B. auch der Schneckenweg s (Pwi=OVG) vorgesehen werden, bei dem der Werkzeuginnendruck Pwi die obere Verarbeitungsgrenze schneidet. Bezüglich der weiteren Prozeßkennzahlenerstellung kann auf die entsprechenden Ausführungen in der WO-A 96/09926 verwiesen werden.

Der Konvertierer ist somit grundsätzlich in der Lage, Einstelldaten aus dem ersten Einstelldatensatz ED₁ soweit als möglich ohne Mitwirkung des Einrichters zu Einstelldaten für den weiteren Einstelldatensatz ED_{1, neu} umzuformen. Die Einstelldaten werden dabei entweder mehr oder weniger 1:1 umgesetzt, ggf. mit für die weitere Steuerung notwendigen Maschinendaten ergänzt, z.B. für Funktionen, die in der ersten Spritzgießmaschine SGM₁ nicht vorhanden waren, mit Standardvorbesetzungen oder interpretiert zu mit der weiteren Steuerung konformen Einstelldaten, so daß spritzgießtechnisch ein bestähnliches bzw. bestmögliches Ergebnis wie auf der ersten Spritzgießmaschine SGM₁ auch auf der zweiten Spritzgießmaschine SGM₂ erreicht wird.

## Patentansprüche

1. Verfahren zur Konvertierung von Einstelldaten für Kunststoffspritzgießmaschinen mit
- einer ersten Spritzgießmaschine (SGM₁) mit einer ersten rechnerunterstützten Steuerung (SGM₁-Control) sowie mit einem ersten Programmspeicher (15) zur Speicherung von Bedienungseingaben und Eingabeparametern als erstem Einstelldatensatz (ED₁),
- wenigstens einer weiteren Spritzgießmaschine (SGM₂) mit einer weiteren rechnerunterstützten Steuerung (SGM₂-Control), die mit der ersten Steuerung zumindest nicht vollständig kompatibel ist, sowie mit einem weiteren Programmspeicher (16) zur Speicherung von Bedienungseingaben und Eingabeparametern als weiterem Einstelldatensatz,
- wenigstens einer Spritzgießform (M),
mit den Schritten:
- Eingeben eines ersten Einstelldatensatzes (ED₁) für die auf der ersten Spritzgießmaschine (SGM₁) befindliche Spritzgießform (M) zur Serienproduktion mit der ersten Steuerung (SGM₁-Control),
- Verbringen der Spritzgießform (M) auf die weitere Spritzgießmaschine (SGM₂),
- Konvertieren des ersten Einstelldatensatzes (ED₁) mittels eines Konvertierers (C) in einen weiteren Einstelldatensatz (ED_{1,neu}) zur Serienproduktion mit der auf der weiteren Spritzgießmaschine (SGM₂) befindlichen Spritzgießform (M) mit der weiteren Steuerung (SGM₂-Control), wobei der Konvertierer (C) mit einer Expertendatenbank (Exp) über die Regeln des Spritzgießens und über die Funktionsweise zumindest des ersten Einstelldatensatzes (ED₁) ausgestattet ist und damit nicht unmittelbar kompatible Einstelldaten des ersten Einstelldatensatzes (ED₁) selbsttätig in Einstelldaten des weiteren Einstelldatensatzes (ED_{1, neu}) wandelt.

2. Verfahren nach Anspruch 1, **dadurch gekennzeichnet, daß** die Expertendatenbank (Exp) ein Grundwissen über die Regeln des Spritzgießens sowie ein Expertenwissen über Aufbau und Funktionsweise des ersten Einstelldatensatzes (ED₁) auf der ersten Spritzgießmaschine (SGM₁) und vorzugsweise ein Wissen über Funktionsweise und Aufbau des weiteren Einstelldatensatzes (ED_{1, neu}) ebenso aufweist wie Informationen über den internen Aufbau der Einstelldatensätze (ED₁, ED_{1, neu}) auf dem Datenträgermedium enthält.

3. Verfahren nach Anspruch 1, **dadurch gekennzeichnet, daß** der Konvertierer (C) kompatible Daten übernimmt und mit der Expertendatenbank (Exp) entscheidet, ob im ersten Einstelldatensatz (ED₁) nicht enthaltene Einstelldaten, die in der weiteren Steuerung (SGM₂-Control) für den weiteren Einstelldatensatz (ED_{1, neu}) erfor-derlich sind, inaktiv sind oder zu ergänzen sind.

4. Verfahren nach Anspruch 1, **dadurch gekennzeichnet, daß** der Konvertierer (C) im ersten Einstelldatensatz (ED₁) nicht enthaltene Einstelldaten, die in der weiteren Steuerung (SGM₂-Control) für den weiteren Einstelldatensatz (ED_{1, neu}) zwingend erforderlich sind, mit dem Grundwissen aus dem ersten Einstelldatensatz (ED₁) errechnet.

5. Verfahren nach Anspruch 1, **dadurch gekennzeichnet, daß** aus dem ersten Einstelldatensatz (ED₁) Parameterkurven berechnet werden und daß der Konvertierer (C) diese Parameterkurven und bedarfsweise ihre mathematischen Integrale und Differentiale zur Erstellung des weiteren Einstelldatensatzes (ED_{1, neu}) verwendet.

6. Verfahren nach Anspruch 1, **dadurch gekennzeichnet, daß** Parameter-Kurven zusätzlich zum ersten Einstelldatensatz (ED₁) aus der Serienproduktion gespeichert werden und daß der Konvertierer (C) diese Parameterkurven und bedarfsweise ihre mathematischen Integrale und Differentiale zur Erstellung des weiteren Einstelldatensatzes (ED_{1, neu}) verwendet).

7. Verfahren nach Anspruch 5 oder 6, **dadurch gekennzeichnet, daß** der Konvertierer jede Parameterkurve abschnittsweise betrachtet, wobei die Abschnitte selbsttätig aus dem ersten Einstelldatensatz (ED₁) und bedarfsweise aus den berechneten Integralen und Differentialen erstellt werden.

## Claims

1. Method for converting regulating data for plastic injection moulding machines comprising
- a first injection moulding machine (SGM₁) comprising a first computer supported control (SGM₁-Control) and a first program storage (15) for storage of operating input and input parameters as a first regulating data set (ED₁),
- at least one further injection moulding machine (SGM₂) with one further computer supported control (SGM₂-Control), which is not completely compatible with the first control, and with one further program storage (16) for storage of operating input and input parameters as an additional regulating data set,
- at least one mould (M),
comprising the steps:
- entering of a first regulating data set (ED₁) for the mould (M) being installed on the first injection moulding machine (SGM₁) for serial production with the first control (SGM₁-Control),
- bringing the mould (M) on the further injection moulding machine (SGM2),
- converting of the first regulating data set (ED₁) by means of a converter (C) into an additional regulating data set (ED_{1,neu}) for serial production with the mould (M) being on the further injection moulding machine (SGM2) with the further control (SGM₂-Control), with the converter (C) being supplied with an expert database (Exp) comprising the rules of injection moulding and the functioning of at least the first regulating data set (ED₁) and thereby converting not directly compatible regulating data of the first regulating data set (ED₁) into regulating data of the additional regulating data set (ED_{1,neu}).

2. Method according to claim 1, **characterised in that** the expert data base (Exp) comprises a basic knowledge about the rules of injection moulding and an expert knowledge about structure and functioning of the first regulating data set (ED₁) on the first injection moulding machine (SGM₁) and comprises preferably a knowledge about functioning and structure of the additional regulating data set (ED_{1,neu}) and furthermore comprises information about the internal organisation of the regulating data sets (ED₁, ED_{1,neu}) on the data carrier medium.

3. Method according to claim 1, **characterised in that** the converter (C) takes over compatible data and decides by means of the expert database (Exp), whether any regulating data not included in the first regulating data set (ED₁), which are necessary for the further control (SGM₂-Control) of the additional regulating data set (ED_{1,neu}) are inactive or to be completed.

4. Method according to claim 1, **characterised in that** the converter (C) calculates regulating data not being contained in the first regulating data set (ED₁), which are compellingly necessary for the further control (SGM₂-Control) for the additional regulating data set (ED_{1,neu}) with the basic knowledge from the first regulating data set (ED₁).

5. Method according to claim 1, **characterised in that** parameter curves are calculated from the first regulating data set (ED₁) and that the converter (C) uses these parameter curves and, if necessary, their mathematical integrals and differentials, to generate the additional regulating data set (ED_{1,neu}).

6. Method according to claim 1, **characterised in that** the parameter curves are additionally stored to the first regulating data set (ED₁) resulting from the serial production and that the converter (C) uses these parameter curves and, if necessary, their mathematical integrals and differentials to generate the additional regulating data set (ED_{1,neu}).

7. Method according to claim 5 or 6, **characterised in that** the converter analyses the parameter curve in sections, therein generating the sections autonomously from the first regulating data set (ED₁) and, if necessary, from the calculated integrals and differentials.

## Revendications

1. Procédé de conversion de données de réglage pour des presses d'injection de matière plastique, comprenant
- une première presse d'injection (SGM₁) avec une première commande assistée par ordinateur (SGM₁-Control) ainsi qu'avec une première mémoire programmable (15) pour la mémorisation de données de commande et de paramètres d'entrée en tant que premier article de réglage (ED₁),
- au moins une autre presse d'injection (SGM₂) avec une autre commande assistée par ordinateur (SMG₂-Control), qui n'est au moins pas totalement compatible avec la première commande, ainsi qu'avec une autre mémoire programmable (16) pour la mémorisation de données de commande et de paramètres d'entrée en tant qu'autre article de réglage,
- au moins un moule d'injection (M),
comprenant les phases :
- introduction d'un premier article de réglage (ED₁) pour le moule d'injection (M) situé sur la première presse d'injection (SGM₁), pour la production en série par la première commande (SGM₁-Control),
- transfert du moule d'injection (M) sur l'autre presse d'injection (SGM₂),
- conversion du premier article de réglage (ED₁) au moyen d'un convertisseur (C) en un autre article de réglage (ED_{1,neu}) pour la production en série avec le moule d'injection (M) situé sur l'autre presse d'injection (SGM₂) par l'autre commande (SGM₂-Control), le convertisseur (C) étant équipé d'une banque de données expert (Exp) sur la régulation du moulage par injection et sur le mode de fonctionnement au moins du premier article de réglage (ED₁), et convertissant ainsi automatiquement des données de réglage non directement compatibles du premier article de réglage (ED₁) en données de réglage de l'autre article de réglage (ED_{1,neu}).

2. Procédé suivant la revendication 1, **caractérisé en ce que** la banque de données expert (Exp) présente une connaissance de base sur la régulation du moulage par injection, ainsi qu'une connaissance d'expert sur la structure et le mode de fonctionnement du premier article de réglage (ED₁) sur la première presse d'injection (SMG₁), et de préférence une connaissance sur le mode de fonctionnement et la structure de l'autre article de réglage (ED_{1,neu}), aussi bien qu'elle comporte des informations sur la structure interne des articles de réglage (ED₁, ED_{1,neu}) sur le support de données.

3. Procédé suivant la revendication 1, **caractérisé en ce que** le convertisseur (C) prend en charge des données compatibles et décide avec la banque de données expert (Exp) si des données de réglage non contenues dans le premier article de réglage (ED₁), requises dans l'autre commande (SGM₂-Control) pour l'autre article de réglage (ED_{1,neu}), sont inactives ou sont à compléter.

4. Procédé suivant la revendication 1, **caractérisé en ce que** le convertisseur (C) calcule avec la connaissance de base, à partir du premier article de réglage (ED₁), des données de réglage, non contenues dans le premier article de réglage (ED₁), qui sont obligatoirement indispensables dans l'autre commande (SGM₂-Control) pour l'autre article de réglage (ED_{1,neu}).

5. Procédé suivant la revendication 1, **caractérisé en ce que** des courbes paramétriques sont calculées à partir du premier article de réglage (ED₁) et que le convertisseur (C) utilise ces courbes paramétriques et en cas de besoin leurs intégrales et différentielles mathématiques pour l'établissement de l'autre article de réglage (ED_{1,neu}).

6. Procédé suivant la revendication 1, **caractérisé en ce que** des courbes paramétriques sont mémorisées à partir de la production en série en supplément du premier article de réglage (ED₁), et que le convertisseur (C) utilise ces courbes paramétriques et en cas de besoin leurs intégrales et différentielles mathématiques pour l'établissement de l'autre article de réglage (ED_{1,neu}).

7. Procédé suivant l'une des revendications 5 et 6, **caractérisé en ce que** le convertisseur considère par section chaque courbe paramétrique, les sections étant établies automatiquement à partir du premier article de réglage (ED₁) et en cas de besoin à partir des intégrales et différentielles calculées.
